# EUROPÄISCHE PATENTSCHRIFT

(11) **EP 2 410 199 B1**
(45) Veröffentlichungstag und Bekanntmachung des Hinweises auf die Patenterteilung: **20.03.2013**
(21) Anmeldenummer: 11185557.3
(22) Anmeldetag: 16.11.2010
(51) Int. Cl.: F16F 1/44, A47J 43/07

(54) **Standfuß, insbesondere für eine Tisch-Küchenmaschine**
Base, in particular for a table kitchen appliance
Pied de support, notamment pour une machine de cuisine sur table

(30) Priorität: 21.11.2009 DE 102009054201
(43) Veröffentlichungstag der Anmeldung: 25.01.2012
(62) Teilanmeldung aus: 10191350.7
(73) Patentinhaber: Vorwerk & Co. Interholding GmbH, 42275 Wuppertal (DE)
(72) Erfinder: Schomacher, Jutta, 42489 Wülfrath (DE); Dallmeier, Stephanie, 42279 Wuppertal (DE)
(74) Vertreter: Müller, Enno

(56) Entgegenhaltungen:
- WO-A1-82/03109
- GB-A- 1 378 758
- JP-A- 59 194 144
- US-A- 3 717 318
- US-A1- 2005 115 022

## Beschreibung

Die Erfindung betrifft einen Standfuß, insbesondere für eine Tisch-Küchenmaschine, wobei die Küchenmaschine einen nach unten abragenden, gehäuseseitigen Fortsatz aufweist, der auf einem, eine Standfläche ausbildenden Elastomerteil aufsitzt, wobei der Fortsatz ein sich nach unten öffnendes Schalenteil aufweist und das Elastomerteil ein in das Schalenteil eingreifendes Dornteil aufweist, wobei weiter das Dornteil in dem Schalenteil mit einem quer zu seiner Erstreckung verbleibenden Spiel aufgenommen ist.

Standfüße insbesondere für Küchenmaschinen sind bekannt. Diese sind zur Abstützung der Küchenmaschine auf einer Fläche, insbesondere auf einer Tischfläche ausgelegt, wobei weiter bevorzugt über den Standfuß in der Küchenmaschine hervorgerufene Sprünge und Schwingungen reduziert werden. Hierbei besteht das Elastomerteil bevorzugt aus einem Gummimaterial oder aus einem thermoplastischen Elastomer.

Bei einem aus der JP-59-194-144 A bekannten Standfuß eines Kompressors ist vorgesehen, dass das Elastomerteil von dem Fortsatz formschlüssig umfasst ist. Der Standfuß selbst ist in der Standfläche verankert. Er ist demgegenüber unbeweglich.

Aus der GB 1378 758 A ist ein Standfuß bekannt, bei welchem ein aus einem Hartmaterial bestehender Fortsatz auf einer gleichsam aus einem Hartmaterial gebildeten Druckplatte aufsitzt, die sich ihrerseits über ein Elastomerteil letztlich auf der Standfläche abstützt. Diese Druckplatte ist innerhalb eines von dem Fortsatz durchsetzten Schalenteil aufgenommen, das mit einem sehr geringen Abstand, etwa 0,25 mm, zu der Druckplatte diese umgibt.

Ausgehend von dem zuletzt genannten Stand der Technik stellt sich der Erfindung die Aufgabe, einen im Hinblick auf eine Küchenmaschine günstig ausgebildeten Standfuß anzugeben.

Diese Aufgabe ist beim Gegenstand des Anspruches 1 gelöst, wobei darauf abgestellt ist, dass der Standfuß mit der Standfläche reibschlüssig verbunden ist, dass die Aufnahme des Dornteils in dem Schalenteil derart ist, dass der Vorsatz gegenüber dem die Standfläche ausbildenden, den Dorn aufweisenden Elastomerteil schiebebeweglich gelagert ist und dass ein quer zu einer Erstreckung des Dornteils verbleibendes Spiel zusammengefasst 1/20 bis 1/5 eines freien Durchmessers des Schalenteils entspricht.

Das bzgl. des Dornteils in dem Schalenteil quer zu seiner Erstreckung verbleibende Spiel ist wesentlich. Zufolge dieser Ausgestaltung ist der gehäuseseitige Fortsatz mit seinem Schalenteil insbesondere quer zu einer Vertikalrichtung, d. h. entsprechend bevorzugt in einer Horizontalrichtung gegenüber dem die Standfläche ausbildenden, den Dorn aufweisenden Elastomerteil schiebebeweglich gelagert. Das vorgesehene Spiel lässt diese Verschieblichkeit zu.

Der gehäuseseitige Fortsatz, weiter bevorzugt insbesondere das sich nach unten in Richtung auf den elastomerteilseitigen Dorn öffnende Schalenteil ist in bevorzugter Ausgestaltung aus einem Hartwerkstoff, insbesondere aus einem Hartkunststoff gefertigt. Es stellt sich entsprechend in der Zusammenwirkungsfläche von Schalenteil und Dornteil ein überwindbarer Reibungswiderstand ein, der weiter bevorzugt kleiner gewählt ist als der Reibungswiderstand zwischen dem die Standfläche ausbildenden Elastomerteil und der beispielsweise durch eine Tischplatte gebildeten Abstützfläche.

Bei Küchenmaschinen wird insbesondere bei einer Herstellung von Teigen dem sich drehenden Rührwerk durch die Zähigkeit des Teiges ein hoher Widerstand entgegengesetzt. Das erforderliche Antriebsdrehmoment des das Rührwerk antreibenden Motors wird über das Gehäuse der Küchenmaschine und die bevorzugt in einer Mehrzahl vorgesehenen Standfüße abgestützt. Ist beispielsweise die Teigkugel ungünstig im Topf angeordnet, bleibt das Rührwerk gegebenenfalls kurzzeitig im Teig stecken. Daraufhin wird das Drehmoment in kurzer Zeit erhöht. Dieser Momentenstoß wird durch den vorgeschlagenen Standfuß kompensiert. Die sprungartig eingeleitete Energie wird in Reibung zwischen den zugeordneten und aufeinander liegenden Flächen von Schalenteil und elastomerteilseitigem Dornteil umgewandelt, wobei weiter bevorzugt das die Standfläche ausbildende Elastomerteil gegenüber der Tischfläche keine Positionsveränderung erfährt.

Das vorgesehene Spiel, mittels welchem das Dornteil in dem Schalenteil aufgenommen ist, ist bevorzugt begrenzt, weiter bevorzugt durch die Schalenwandung des Schalenteils. Zudem ist bevorzugt das Elastomerteil, insbesondere das mit dem Schalenteil zusammenwirkende Dornteil, zufolge entsprechender Materialwahl steif gestaltet, so dass unterkritische Schwingungen, hervorgerufen beispielsweise durch eine Unwuchterregung, gut kompensiert werden. Stoßenergie wird hierbei über Reibung in Wärme umgewandelt.

Zufolge der vorgeschlagenen Lösung ist eine schwimmende Lagerung bevorzugt in der horizontalen Bewegungsrichtung erreicht, wobei weiter die Verbindung zwischen Fortsatz und Elastomerteil in vertikaler Bewegungsrichtung steif ausgebildet ist. Es ist weiter eine physikalische Trennung zwischen dem die Standfläche ausbildenden Elastomerteil und der Maschine erreicht, wobei der gehäuseseitige Fortsatz fest, d. h. unbeweglich an der Maschine befestigt ist.

In einer weiter bevorzugten Ausgestaltung ist vorgesehen, dass das Schalenteil stirnseitig freikragend endet. Entsprechend erstreckt sich bevorzugt eine nach unten in Richtung auf die Standfläche weisende Stirnfläche des Schalenteiles mit Abstand, weiter bevorzugt mit vertikalem Abstand zur Standfläche, weiter bevorzugt mit Abstand zu einer zugewandten Fläche des Elastomerteils radial außerhalb des Dornteils. Dies bietet in vorteilhafter Weise die Möglichkeit einer geringfügigen Stauchung des Dornteils in Vertikalrichtung zur Absorption von Sprüngen in der Vertikalrichtung, wobei die Ringfläche des Schalenteiles und/oder die Steifigkeit des Dornteiles in Vertikalrichtung so ausgelegt ist, dass auch starke Vertikalsprünge nicht zu einem Kontakt des freikragenden Schalenteils mit der zugewandten, vertikal beabstandeten Fläche erreicht wird.

Weiter bevorzugt liegt das Elastomerteil, weiter insbesondere das Dornteil des Elastomerteils auf dem Schalenboden ebenflächig auf. Hierbei erstreckt sich weiter bevorzugt diese Ebene in einer Horizontalebene, weiter insbesondere in einer Parallelebene zur Aufstandsfläche. Auch kann zufolge entsprechender Ausgestaltung das Elastomerteil kalottenartig auf dem Schalenboden aufliegen, wobei der Schalenboden entsprechend zur bevorzugt vollflächigen Auflage insbesondere des zugeordneten Dornteilendes ausgeformt ist. Bei einer derartigen kalottenartigen Auflage ist bevorzugt ein so großer Kalottenradius gewählt, dass sich annähernd eine ebenflächige Auflageebene sich einstellt.

Das quer zur Dornerstreckung verbleibende Spiel entspricht zusammengefasst - d. h. unter Berücksichtigung einer Schiebeverlagerbarkeit in zwei entgegengesetzt zueinander betrachteten Richtungen -1/20 bis 1/5 eines freien Durchmessermaßes des Schalenteiles. Hieraus ergibt sich entsprechend das Durchmessermaß des in das Schalenteil eingreifenden Dornteiles, wobei weiter bevorzugt sowohl das Schalenteil als auch das Dornteil rotationssymmetrisch mit Bezug zu einer Vertikalachse gestaltet sind.

Das Schalenteil ist weiter bevorzugt außen von einem Mantelabschnitt des Elastomerteils umfasst. Dieser Mantelabschnitt ist entsprechend bevorzugt elastisch eingestellt, wirkt weiter bevorzugt nicht auf die freie Verschiebbarkeit von Schalenteil und Dornteil zueinander ein. Bei dem Mantelabschnitt handelt es sich hierbei bevorzugt um einen dünnwandigen Abschnitt des Elastomerteils, weiter um einen etwa membranartigen Abschnitt mit einer Materialstärke von bevorzugt 0,1 bis 0,5 mm. Der Mantelabschnitt beeinträchtigt nicht die Bewegung des mit dem Fortsatz versehenen Gehäuses relativ zum fußteilseitigen Elastomerteil. Der Mantelabschnitt dient bevorzugt zum Verschluss der vorbeschriebenen Verbindung zwischen Schalenteil und Dornteil, so dass zwischen Schalenteil und Dornteil sich einstellende Hohlräume durch die Umfassung des Schalenteiles durch den Mantelabschnitt gegen Verschmutzung oder Ansiedlung von Ungeziefer geschützt sind. Hierbei ist weiter bevorzugt der Mantelabschnitt mit dem Fortsatz fest verbunden, so beispielsweise zufolge Verklebung oder Verschweißung. Weiter bevorzugt ist der Mantelabschnitt an dem Fortsatz rastgehaltert, weiter bevorzugt lösbar rastgehaltert, was die Möglichkeit eines Entfernens des den Fuß ausformenden Elastomerteils von dem gehäuseseitigen Fortsatz bietet, um beispielsweise das Elastomerteil einer Reinigung zuzuführen. Zufolge der dauerhaft festen oder auch lösbaren Verbindung ist das Elastomerteil unverlierbar an dem Fortsatz gehaltert, so dass auch mit einem Anheben der Küchenmaschine das Elastomerteil an dem Fortsatz verbleibt. In weiterer Ausgestaltung ist der Mantelabschnitt durch einen Spannring oder ein Spannelement an dem Fortsatz befestigt.

Weiter bevorzugt ist eine Umfangsfläche des Elastomerteils, insbesondere der Mantelabschnitt sich nach oben hin, d. h. in Richtung auf den Fortsatz hin verjüngend ausgebildet, weiter bevorzugt zufolge konischer Ausformung desselben.

Das Überdeckungsmaß zwischen dem Schalenteil und dem Dornteil entspricht in weiter bevorzugter Ausgestaltung in vertikaler Höhe dem 0,2-Fachen bis 0,5-Fachen des Durchmessermaßes des Schalenteiles.

Das Elastomerteil ist oberhalb der Zusammenwirkungsfläche unmittelbar elastisch rückstellfähig an dem Gehäuse der Küchenmaschine angebunden. Zufolge dieser Ausgestaltung ist das Elastomerteil bevorzugt unverlierbar an dem Gehäuse der Küchenmaschine befestigt, weiter bevorzugt lösbar befestigt, so dass auch bei einem Anheben der Küchenmaschine von einer Standfläche das Elastomerteil an dem Gerät verbleibt. Es bedarf entsprechend keiner für den Benutzer umständlichen Anordnung des Elastomerteils bei jedem Standortwechsel des Gerätes. Die Anbindung erfolgt hierbei bevorzugt durch Klemmen oder Verrasten, weiter gegebenenfalls unter Nutzung von Spannringen bzw. Spannelementen. In vorteilhafter Weise ist die Anbindung elastisch rückstellfähig gewählt, wozu bevorzugt insbesondere der der Anbindung dienende Bereich des Elastomerteils entsprechend eingestellt ist. Die gewählte Elastizität bietet trotz entsprechender Anbindung an das Gehäuse eine relative Verlagerbarkeit von Dornteil und Elastomerteil zueinander, wobei bevorzugt die Anbindungsbereiche festliegen.

So ist bevorzugt das Elastomerteil oberhalb der Zusammenwirkungsfläche unmittelbar elastisch rückstellfähig an dem Dornteil angebunden, wobei weiter bevorzugt das Dornteil unmittelbar auf dem Elastomerteil aufsitzt, welche Anordnung insbesondere Schwingungen in Horizontalrichtung zufolge Reibung in Wärme umwandelt. Diese Relativverlagerbarkeit des Dornteiles auf dem Elastomerteil ist durch die gewählte Anbindung des Elastomerteils an dem Dornteil ungehindert, dies zufolge der bevorzugten elastisch rückstellfähigen Ausgestaltung der Anbindung. So ist weiter bevorzugt der der Anbindung dienende Bereich des Elastomerteils gegenüber dem mit dem Dornteil zusammenwirkenden Bereich dünnwandig, membranartig gestaltet, mit einer bevorzugten Materialstärke von 0,1 bis 0,5 mm.

Weiter bevorzugt ist das Elastomerteil schalenartig ausgebildet, mit einer in Übergriff zu dem Dornteil überstehenden Wandung. Der Schalenboden bietet auf der der Standfläche abgewandten Fläche die Aufsetzfläche für den gehäuseseitigen Dornteil, wobei weiter bevorzugt diese Fläche des Schalenbodens so groß gewählt ist, dass eine bevorzugte Horizontalverlagerbarkeit des Dornteiles auf der Fläche erreicht werden kann. Entsprechend ist das Dornteil in dem elastomerteilseitigen Schalenteil mit einem quer zur Dornerstreckung verbleibenden Spiel aufgenommen, wobei weiter bevorzugt das verbleibende Spiel zusammengefasst dem 0,2- des 0,7-Fachen des freien Durchmessermaßes des Schalenteiles entspricht. Die Schalenwandung umfasst das Dornteil bevorzugt umlaufend, wobei weiter bevorzugt die Schalenöffnung nach vertikal oben weist und die sich entsprechend einstellende Stirnfläche der umlaufenden Schalenwandung vertikal beabstandet ist zu einer zugeordneten Bodenfläche des Gehäuses.

In vorteilhafter Weise weist das schalenartige Elastomerteil eine Schalendecke auf, mit einem Abstand zu dem Schalenboden, die an dem Gehäuse und/oder an dem Dornteil zum Verschluss eines Schaleninnenraumes angebunden ist. Die so geformte Schalendecke schützt den Schaleninnenraum vor Verschmutzung oder vor Ansiedlung von Ungeziefer. Die Schalendecke ist durchsetzt von dem Dornteil des gehäuseseitigen Fortsatzes. In bevorzugter Ausgestaltung ist die Schalendecke elastisch rückstellfähig ausgebildet und bietet die vorbeschriebene elastisch rückstellfähige Anbindung des Elastomerteils an das maschinenseitige Gehäuse bzw. an das Dornteil. Zufolge der elastisch rückstellfähigen Ausgestaltung der Schalendecke ist das Dornteil auch bei Durchsatz der Schalendecke frei in einer Richtung quer zur Vertikalerstreckung beweglich.

Weiter bevorzugt ist ein verschlossener Hohlraum mit einem Fluid gefüllt. So ist eine zumindest unterstützende Flüssigkeitsreibung erreicht, weiter unter Anwendung von Öl eine Stoßdämpferwirkung insbesondere in horizontaler Richtung.

In weiterer Ausgestaltung können zwischen den Oberflächen von Elastomerteil und Dornteil beispielsweise Kugeln zur Bildung einer Wälzlagerung angeordnet sein.

Zur Erhöhung der Reibpartner sind in einer weiteren Ausgestaltung anstelle nur einer Reibfläche zwischen Dornteil und Elastomerteil zusätzliche Scheiben angeordnet. Hierbei sind die zusätzlichen Funktionsflächen weiter bevorzugt aus einem unterschiedlichen Werkstoff als das Dornteil und das Elastomerteil gebildet, wobei die Reibkoeffizienten zwischen den einzelnen Reibpartnern durch unterschiedliche Rautiefen und Beschichtungen eingestellt sind.

Alle Zwischenwerte, insbesondere in 1 mm-Schritten und hinsichtlich einer ein-oder mehrfachen Einengung der angegebenen Bereichsgrenze in derselben Schrittweise, von oben und/oder von unten, sind hiermit in die Offenbarung eingeschlossen.

Nachstehend ist die Erfindung anhand der beigefügten Zeichnung näher erläutert. Es zeigt:
- Fig. 1: in perspektivischer Darstellung eine Tisch-Küchenmaschine mit Standfüßen zum Aufstellen der Küchenmaschine auf einer Tischfläche;
- Fig. 2: einen gerätebodenseitig angeordneten Standfuß in einer Ausführungsform der Erfindung;
- Fig. 3: den Schnitt gemäß der Linie III-III in Fig. 2, eine unbelastete Grundstellung betreffend;
- Fig. 4: eine der Fig. 3 entsprechende Darstellung, jedoch in einer Belastungsstellung;
- Fig. 5: eine der Fig. 2 entsprechende Darstellung, jedoch eine nicht erfindungsgemässe Ausführungsform betreffend;
- Fig. 6: den Schnitt gemäß der Linie VI-VI in Fig. 5;
- Fig. 7: eine Schnittdarstellung gemäß Fig. 6, eine belastete Stellung betreffend;
- Fig. 8: eine weitere der Fig. 2 entsprechende Darstellung, eine nicht erfindungsgemässe Ausführungsform betreffend;
- Fig. 9: den Schnitt gemäß der Linie IX-IX in Fig. 8;
- Fig. 10: eine der Fig. 9 entsprechende Darstellung, eine Belastungsstellung betreffend;
- Fig. 11: eine der Fig. 2 entsprechende Darstellung, eine nicht erfindungsgemässe Ausführungsform betreffend;
- Fig. 12: den Schnitt gemäß der Linie XII-XII in Fig. 11;
- Fig. 13: eine der Fig. 12 entsprechende Darstellung, jedoch im Zuge einer Belastung.

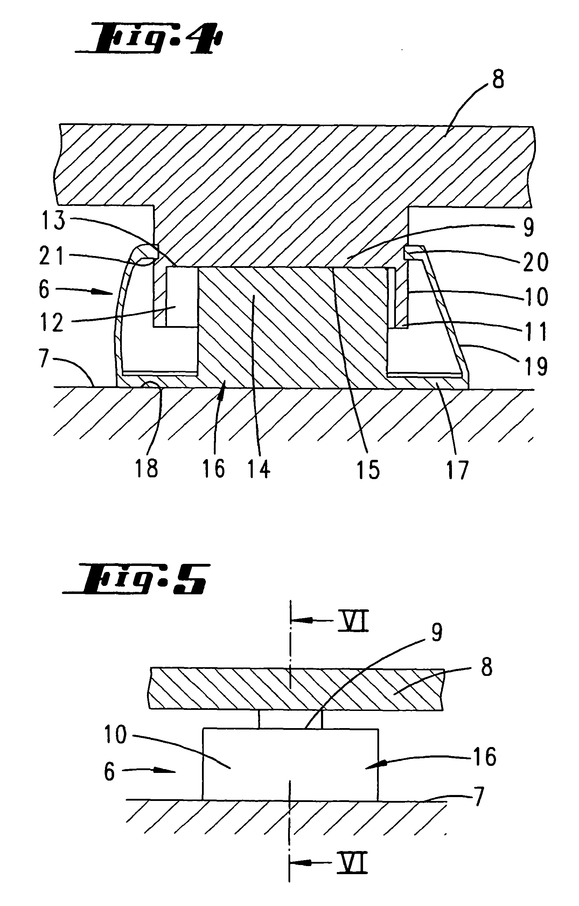

Die Figuren 5 bis 13 betreffen keine Ausführungsformen gemäß der Erfindung.

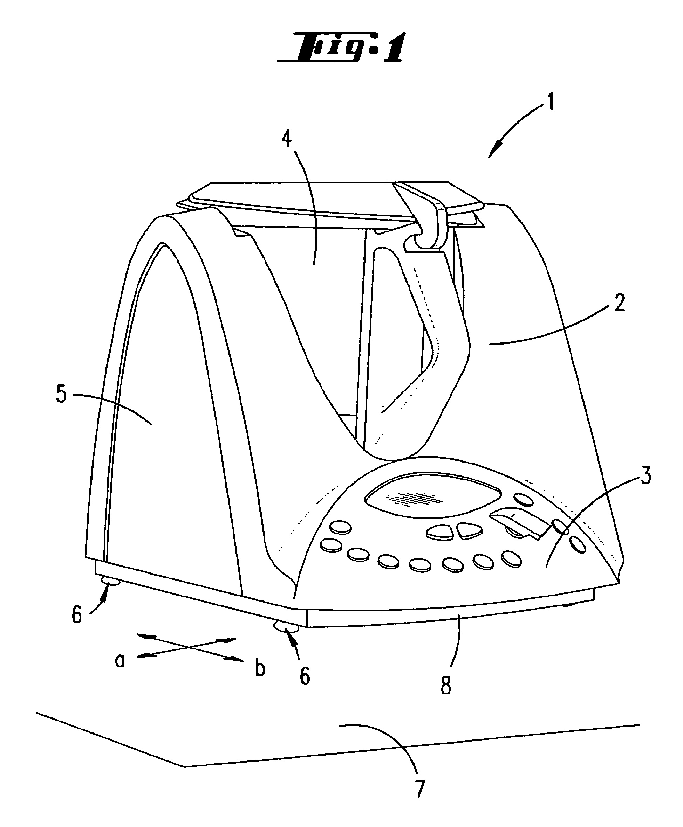

Dargestellt und beschrieben ist zunächst mit Bezug zu Fig. 1 eine Küchenmaschine 1 mit einer Rührgefäß-Aufnahme 2 und einem Bedienfeld 3.

Der Küchenmaschine 1 ist ein Rührtopf 4 zugeordnet. Dieser sitzt in der Rührgefäß-Aufnahme 2 ein. In dem Rührtopf 4 ist zugeordnet einem Rührtopfboden, ein Rührwerk vorgesehen, welches über einen in der Küchenmaschine 1 unterhalb der Aufnahme 2 angeordneten, nicht dargestellten Elektroantrieb betrieben wird.

Das Gehäuse 5 der Küchenmaschine 1 stützt sich über Stützfüße 6 auf einer Fläche, hier auf einer Tischfläche 7 ab. Die Stützfüße 6 sind hierzu unterseitig eines Gehäusebodens 8 befestigt.

Die Küchenmaschine 1 ist unter anderem geeignet zur Herstellung von Teigen. In einem solchen Teigmodus wird mit dem sich drehenden Rührwerk durch die Zähigkeit des Teiges ein hoher Widerstand entgegengesetzt. Das erforderliche Antriebsmoment des Motors wird über das Gehäuse 5 und die Stützfüße 6 abgestützt. Ist die Teigkugel ungünstig im Rührgefäß 4 angeordnet, bleibt das Rührwerk gegebenenfalls kurzzeitig im Teig stecken. Zufolge dessen wird das Drehmoment kurzzeitig erhöht. Dieser Momentenstoß wird von den Stützfüßen 6 kompensiert, so dass sich das Gerät nicht ruckartig und sprunghaft um seinen Schwerpunkt dreht.

Die Bewegung des Gehäuses 5 in horizontaler Richtung (vgl. Pfeile a und b in Fig. 1) wird zugelassen. Das Gehäuse 5 kann sich relativ zu den Stützfüßen 6 bzw., wie nachstehend näher erläutert, relativ zu einem Teilabschnitt der Stützfüße 6 in der horizontalen Ebene bewegen. Die sprungartig eingeleitete Energie wird in Reibung und/oder Rückstell- und Verformungsenergie umgewandelt. Die Stützfüße 6 sind hierbei weiter mit der Standfläche - hier der Tischfläche 7 - verbunden, insbesondere reibschlüssig verbunden.

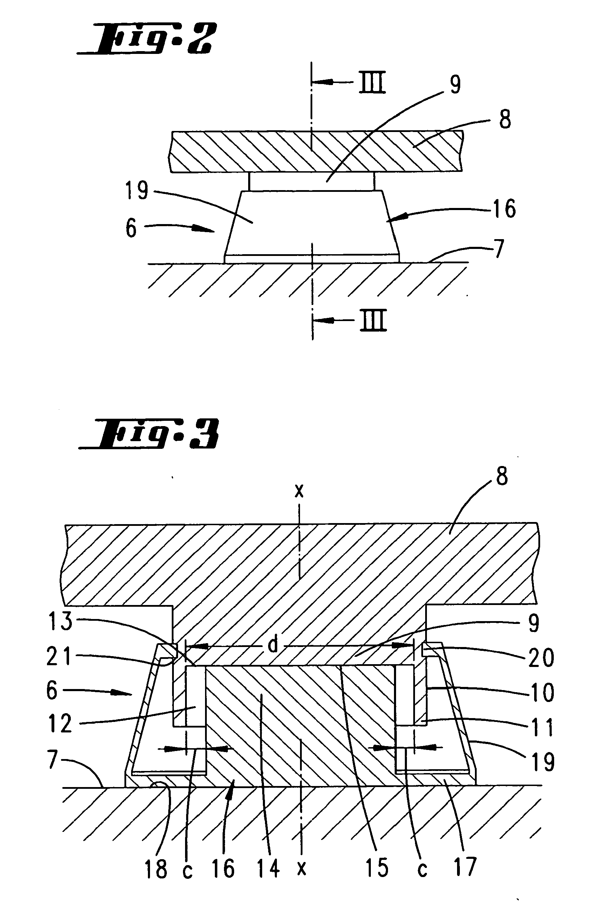

Die Fig. 2 bis 4 zeigen eine erfindungsgemässe Ausführungsform eines Stützfußes 6. Dieser ist grundsätzlich zweiteilig gestaltet, wobei ein Teil gehäusefest vorgesehen ist. Hierbei handelt es sich um einen Fortsatz 9, der gehäuseseitig, insbesondere gehäusebodenseitig angeformt ist und nach vertikal unten über die nach unten gerichtete Gehäusebodenfläche abragt. Der Fortsatz 9 ist als Starrteil ausgebildet, weiter bevorzugt zufolge einstückiger, materialeinheitlicher Ausgestaltung zusammen mit dem Gehäuseboden 8. Entsprechend kann es sich bei dem Fortsatz 9 um einen Hartkunststoff- oder Metallkörper handeln, der weiter bevorzugt mit Bezug auf eine zentrale den Fortsatz 9 durchsetzende Vertikalachse x rotationssymmetrisch ausgebildet ist. Neben der einstückigen Ausgestaltung ist alternativ ein Fortsatz 9 vorgesehen, der unterseitig am Gehäuseboden 8 festlegbar, beispielsweise einschraubbar ist.

Der Fortsatz 9 formt ein sich nach vertikal unten öffnendes Schalenteil 10 aus, dessen Außendurchmesser dem Außendurchmesser des Fortsatzes 9 entspricht. Die umlaufende Schalenwandung 11 begrenzt in Horizontalrichtung einen Schalenraum 12, wobei die Wandungsstärke in dem dargestellten Ausführungsbeispiel etwa 1/20 des Schalenteil-Außendurchmessers entspricht. Die vertikale Höhe der Schalenwandung 11 entspricht bevorzugt etwa 1/4 des Schalenteil-Außendurchmessers.

Der sich hieraus ergebende Schalenboden 13 erstreckt sich in einer quer zur Vertikalachse x gerichteten Ebene, weiter in einer Horizontalebene, die entsprechend parallel ausgerichtet ist zur Tischfläche 7.

In das Schalenteil 10, weiter in den Schalenraum 12 eingreifend ist ein Dornteil 14 vorgesehen. Auch hierbei handelt es sich bevorzugt um ein rotationssymmetrisches Bauteil mit einer vertikal nach oben weisenden Stirnfläche 15, die parallel ausgerichtet ist zum Schalenboden 13, entsprechend sich auch bevorzugt in einer Horizontalebene erstreckt.

Das Dornteil 14 ist Teil eines Elastomerteils 16. Letzteres weist einen Boden 17 auf, mit einer vertikal nach unten weisenden Standfläche 18 zur Abstützung auf der Tischfläche 7. Der Boden 17 ist in dem dargestellten Ausführungsbeispiel im Grundriss kreisrund als Scheibe ausgebildet, mit einem Durchmesser, der etwa dem 2-Fachen des Außendurchmessers des Dornteils 14 entspricht. Letzteres sitzt zentral auf dem Boden 17 und ist mit diesem verbunden, weiter bevorzugt materialeinheitlich und einstückig mit diesem verbunden.

Die vertikale Höhe des Dornteiles 14 ist so gewählt, dass das Schalenteil 10 in Zuordnungsstellung, d. h. in der Auflagestellung des Schalenbodens 13 auf der Stirnfläche 15 des Dornteils 14 freikragend endet, d. h. mit vertikalem Abstand zur zugewandten Oberfläche des elastomerteilseitigen Bodens 17 endet. So ist in dem dargestellten Ausführungsbeispiel eine vertikale Höhe des Dornteiles 14 gewählt, die etwa dem 2-Fachen der vertikalen Tiefe des Schalenteiles 10 bzw. der vertikalen Höhe der Schalenwandung 11 entspricht.

Das Dornteil 13 ist in dem Schalenteil 10 mit einem quer zu der Dornerstreckung verbleibenden Spiel aufgenommen, so dass eine relative Beweglichkeit des Schalenteils 10 bzw. des Fortsatzes 9 zu dem Dornteil 14 erreichbar ist. So entspricht in dem dargestellten Ausführungsbeispiel das verbleibende Spiel (Addition der sich beidseitig des Dornteiles 14 in Fig. 3 einstellenden Spielmaße c) zusammengefasst etwa 1/6 des freien Innendurchmessers d des Schalenteiles 10.

Außenseitig ist das Schalenteil 10 umfasst von einem Mantelabschnitt 19 des Elastomerteils 16. Letzterer ist an dem Boden 17 des Elastomerteils 16 entlang der Randkante angebunden und erstreckt sich hüllenartig unter konischer Verjüngung bei zunehmender vertikaler Beabstandung zum Boden 17 bis in den Übergangsbereich von Schalenteil 10 und Fortsatz 9. Hier ist der Mantelabschnitt 19 an dem Fortsatz 9 rastgehaltert, wozu eine entsprechende umlaufende Verdichtung 20 des Mantelabschnittes 19 in eine wandungsaußenseitig des Fortsatzes 9 vorgesehene Ringnut 21 eingreift.

Der Mantelabschnitt 19 ist insbesondere gegenüber dem Boden 17 verdünnt ausgebildet, weiter membranartig mit einer Materialstärke von 0,1 bis 0,5 mm. Hieraus ergibt sich eine hohe Flexibilität des Mantelabschnittes 19. Letzterer ist zufolge der bevorzugt einheitlichen Elastomereigenschaften elastisch rückstellfähig eingestellt. Mittels des Mantelabschnittes 19 ist der Zusammenwirkungsbereich von Dornteil 14 und Schalenteil 10 beispielsweise vor Verschmutzungen geschützt. Zudem ist hierdurch eine unverlierbare Anbindung des Dornteiles 14 an den Fortsatz 9 gegeben.

Zufolge der vorbeschriebenen Ausgestaltung eines Stützfußes 6 ist eine schwimmende Lagerung in der horizontalen Bewegungsrichtung a und b gegeben, wobei in vertikaler Bewegungsrichtung die Verbindung zwischen Fortsatz und Elastomerteil 16 steif gestaltet ist, so dass unterkritische Schwingungen, beispielsweise hervorgerufen durch eine Unwuchterregung, gut kompensiert werden können. Hierbei ist ein Abgleiten des Fortsatzes 9 relativ zu dem Dornteil 14 im Bereich der aufeinanderliegenden Flächen (Schalenboden 13 und Stirnfläche 15) erreichbar (vgl. Fig. 4), wobei die Horizontalbewegung zufolge der überlappenden Schalenwandung 11 begrenzt ist.

Hierbei ist der Reibungswiderstand zwischen Schalenboden und Stirnfläche 15 des Dornteiles 14 geringer als der Reibungswiderstand zwischen der Standfläche 18 des Elastomerteils 16 und der Tischfläche 7.

Der als dünne elastische Schicht ausgebildete Mantelabschnitt 19 beeinträchtigt hierbei nicht die Bewegung des Gehäuses 5 bzw. des an diesem fest angebrachten Fortsatzes 9, sondern dient lediglich zur Fixierung beim Hochheben und Tragen des Gerätes sowie zur Abdeckung des geschaffenen Hohlraums. Durch Aufhebung der Rastverbindung kann das Elastomerteil 16 leicht abgenommen werden und so separat gereinigt werden.

Zur Bildung des Elastomerteils 16 kommen bevorzugt Naturkautschuke oder synthetische Kautschuke wie beispielsweise Styrol-Butadien-Kautschuk zur Anwendung.

Die Fig. 5 bis 7 zeigen eine nicht erfindungsgemässe Ausführungsform. Hier formt der gehäuseseitige Fortsatz 9 ein nach vertikal unten weisendes, starres Dornteil 14 aus, das in ein nach vertikal oben offenes Schalenteil 10 eintaucht. Das Schalenteil 10 ist hier als Elastomerteil 16 gebildet, mit einem mit seiner Standfläche 18 in der Nutzungsstellung auf der Tischfläche 7 aufliegenden Schalenboden 13 und einer bodenseitig, randseitig bevorzugt umlaufenden Schalenwandung 11, deren vertikale Höhe geringer bemessen ist als die des Dornteils 14. Letzteres stützt sich mit der vertikal nach unten weisenden Stirnfläche auf der zugewandten Oberfläche des Schalenbodens 13 ab.

Die Zusammenwirkung von dornteilseitiger Stirnfläche 15 und zugewandter Oberfläche des Schalenbodens 13 ist auch in diesem Ausführungsbeispiel in einer ebenen Fläche erreicht, weiter bevorzugt in einer Horizontalebene.

Das Schalenteil 10 weist in dem dargestellten Ausführungsbeispiel einen Innendurchmesser auf, der etwa dem 3-Fachen des Dornteildurchmessers entspricht. Demzufolge ist das Dornteil 14 auch hier mit einem horizontalen Spiel in dem Schalenteil 10 aufgenommen, so dass eine Relativverlagerung zufolge Stöße oder Schwingungen in der Küchenmaschine 1 erlaubt sind. Auch ist hierbei der Reibungswiderstand zwischen der dornteilseitigen Stirnfläche 15 und dem Schalenboden 13 geringer gewählt als zwischen der Standfläche 18 des Schalenbodens 13 und der Tischfläche 7, so dass das schalenartige Elastomerteil 16 auch bei Einleitung sprungartiger Energie mit der Tischfläche 7 verbunden bleibt.

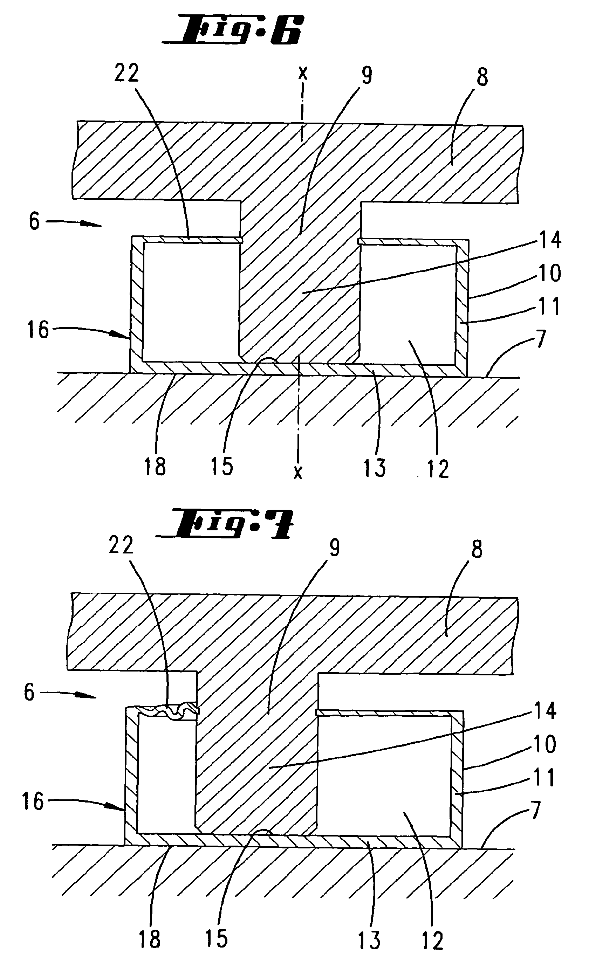

Der Schalenraum 12 ist überdeckt von einer vom Dornteil 14 durchsetzten Schalendecke 22. Diese ist, wie der Mantelabschnitt 19 der ersten Ausführungsform, gegenüber der Schalenwandung 11 hinsichtlich der Materialstärke verringert, zur Bildung der Schalendecke 22 in Art einer elastischen Membran. Diese Schalendecke 22 ist umlaufend im Bereich des freien nach vertikal oben ragenden Randes an der Schalenwandung 11 befestigt und weist in einer Grundausrichtung zentral eine Durchtrittsöffnung für das Dornteil 14 auf. Entlang des Randes der Durchtrittsöffnung ist die membranartige Schalendecke 22 beispielsweise durch Verkleben oder Verschweißen mit dem Dornteil 14 verbunden (vgl. Fig. 6).

Zufolge dieser Anordnung ist der Schalenraum 12 verschlossen. Durch die rückstellfähig elastische Ausgestaltung der Schalendecke 22 kann diese zufolge Dehnung bzw. Stauchung die Horizontalbewegung des Dornteiles 14 relativ zum Schalenteil 10 mit vollziehen (vgl. Fig. 7).

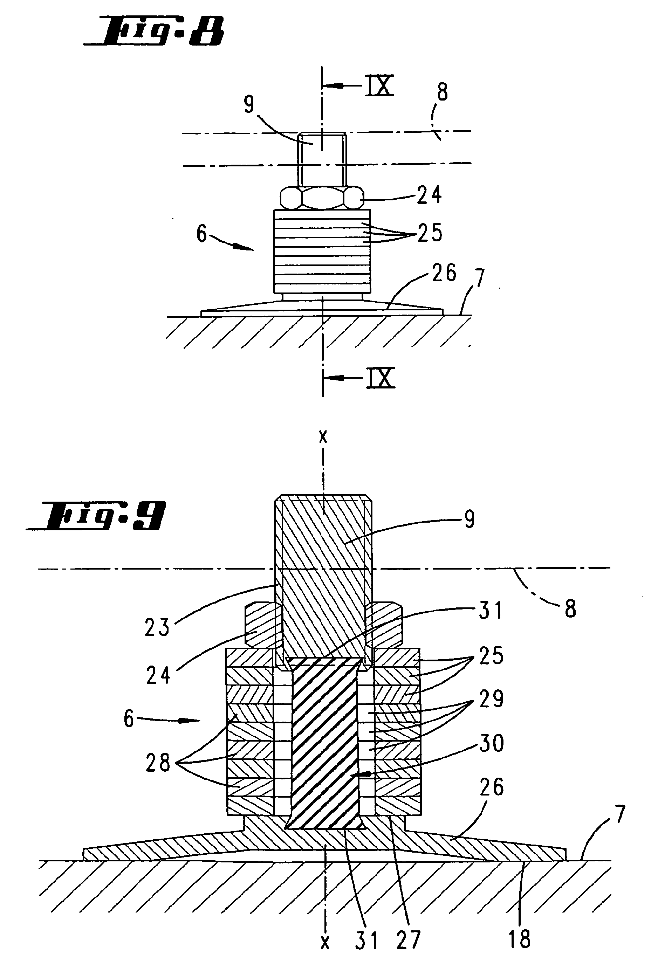

Eine weitere nicht erfindungsgemässe Ausführungsform zeigen die Fig. 8 bis 10. Auch in dieser Ausführungsform weist das Gehäuse 5 der Küchenmaschine 1 einen nach vertikal unten abragenden Fortsatz 9 auf. Dieser ist als Starrteil, insbesondere als Hartkunststoff- oder Metallteil ausgebildet, dies weiter zapfenartig rotationssymmetrisch.

Der Fortsatz 9 weist ein Außengewinde 23 auf. Auf dieses ist eine Schraubmutter 24 aufgedreht, über welche sich der Fortsatz 9 unter Zwischenschaltung von Scheibenteilen 25 auf einem die Standfläche 18 ausbildenden Standteil 26 abstützt. Letzteres ist zunächst tellerartig gestaltet mit einem Durchmesser, der einem Mehrfachen, in dem dargestellten Ausführungsbeispiel etwa einem 4-Fachen des Fortsatz-Durchmessers entspricht. Der mittige Bereich des Standteiles 26 ist gegenüber der Standfläche 18 erhaben, so dass sich die Standfläche 18 umlaufend randseitig des Standteiles 26 ergibt.

Der mittige erhabene Bereich des Standteiles 26 formt eine sich in einer Horizontalebene erstreckende Stützfläche 27.

Zwischen der fortsatzseitigen Schraubmutter 24 und der standteilseitigen Stützfläche 27 sind in dem dargestellten Ausführungsbeispiel neun flächig aufeinanderliegende Scheibenteile 25 gespannt. Diese Scheibenteile 25 sind als Ringteile 28 ausgebildet, weisen entsprechend jeweils eine zentrale Durchtrittsöffnung 29 auf. Hierbei ist der Durchmesser der Durchtrittsöffnung 29 angepasst an den Außendurchmesser des Fortsatzes 9, weiter bevorzugt diesen Außendurchmesser geringfügig übertreffend, so dass ein nach vertikal unten weisendes Ende des Fortsatzes 9 je nach Drehverlagerung der Schraubmutter 24 mehr oder weniger in eine oder mehrere Durchtrittsöffnungen 29 der Scheibenteile 25 eintaucht.

Die Scheibenteile 25 sind weiter bevorzugt gleichgestaltet, dies zunächst insbesondere hinsichtlich ihrer in Vertikalrichtung betrachteten Dicke als auch hinsichtlich ihrer Innen- und Außendurchmesser. Weiter sind die Scheibenteile 25 bevorzugt auch hinsichtlich der Materialwahl gleichgestaltet, wobei weiter die Scheibenteile 25 aus einem Hartkunststoff oder auch aus einem Metallwerkstoff bestehen.

Die Scheibenteile 25 sind im Bereich ihrer Durchtrittsöffnungen 29 durchsetzt von einem Elastomerteil 30. Hierbei handelt es sich um ein insgesamt schnurartiges Elastomerteil, das beidseitig endseitig verankert ist, nämlich zum einen im Bereich der in Richtung auf die Durchtrittsöffnungen 29 weisenden Stirnseite des Fortsatzes 9 und zum anderen in dem Mittenabschnitt des Standteiles 26. Zur Verankerung ist in dem dargestellten Ausführungsbeispiel die jeweilige Aufnahme 31 für das Elastomerteilende hinterschnitten. Entsprechend ist das Elastomerteil 30 so festgelegt, dass sich dieses auch unter üblicher Zugbeanspruchung nicht aus der jeweiligen Verankerung lösen kann.

Die übereinandergestapelten Scheibenteile 25 liegen plan mit ihren Reibflächen aufeinander, wobei diese zufolge der mittigen Durchsetzung mit dem Elastomerteil 39 horizontal flexibel übereinandergestapelt sind. Das als elastisches Band oder als elastische Schnur gebildete Elastomerteil 30 verbindet die Reibflächen zu einer lose gebundenen Komponente, wobei die Flexibilität und damit die horizontale Begrenzung und Beweglichkeit insbesondere durch die Länge, den Durchmesser und die Materialwahl der Scheibenteile 25 einstellbar ist.

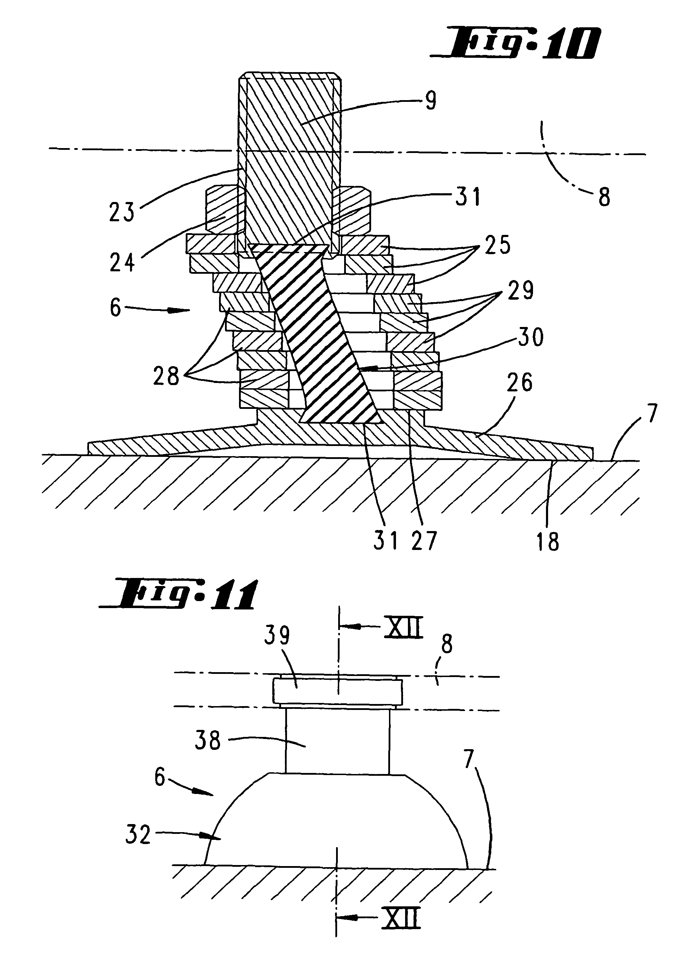

In Fig. 9 ist eine ideale Grundstellung des Stützfußes 6 dargestellt. Zufolge vorbeschriebener Belastungen in Horizontalrichtung (Pfeile a + b) ergibt sich eine unter Umständen ungleichmäßige Verlagerung der Scheibenteile 25 gemäß Fig. 10, wobei zufolge der Verspannung des Fortsatzes 9 gegen das Standteil 26 das Elastomerteil 30 auf Zug beansprucht wird. Das Elastomerteil 30 ist hierbei weiter bevorzugt so ausgelegt, dass über dieses eine Rückstellung in die Grundstellung gemäß Fig. 9 erreicht werden kann. Weiter wird jedoch im laufenden Betrieb der Küchenmaschine 1 immer wieder eine neue, zufällige Ausrichtung der Scheibenteile 25 zueinander sowie eine Ausrichtung des Fortsatzes 9 zu den Scheibenteilen 25 erreicht.

Die Schraubmutter 24 dient in erster Linie zur Verhinderung des Verlierens eines der Funktionselemente. Darüber hinaus ist über die Schraubmutter 24 eine Vorspannung der Funktionselemente erreichbar, um so die Reibungseigenschaften zu variieren. Das die Schraubmutter 24 tragende Außengewinde 23 dient bevorzugt weiter auch zur Festlegung des Fortsatzes 9 am Gehäuse 5, insbesondere am Gehäuseboden 8.

Eine weitere nicht erfindungsgemässe Ausführungsform zeigen die Fig. 11 bis 13. Hier ist der Stützfuß 6 einteilig, bevorzugt materialeinheitlich als Elastomerteil 32 gebildet. Dieses setzt sich zusammen aus einem nach vertikal oben offenen Schalenteil 33, dessen Schalenboden 34 unterseitig die Standfläche 35 bildet. Auch hierbei handelt es sich bevorzugt um ein rotationssymmetrisches Teil. Die entsprechend umlaufende, schalenbodenrandseitig angeordnete und sich nach vertikal oben erstreckende Schalenwandung weist eine vertikale Höhe auf, die etwa dem Außenradius des Schalenbodens 34 entspricht.

Radial außen geht die Schalenwandung 36 in eine, zur Auflage auf die Tischfläche 7 ausgelegte Stützwandung 37 über. Diese setzt am frei nach vertikal oben abragenden Ende der Schalenwandung 36 an und erstreckt sich in einem Querschnitt betrachtet kreisabschnittförmig bis zur Ebene der Standfläche 35, so dass sich insgesamt eine kalottenartige Form des Schalenteiles 33 einstellt.

Die nach vertikal oben weisende frei Randkante der Schalenwandung 36 definiert eine Austrittsebene. Durch diese tritt ein rohrartiger Verbindungsabschnitt 38. Dieser wurzelt fußseitig in dem Schalenboden 34 und ist bevorzugt materialeinheitlich, einteilig, mit diesem verbunden. Bei zentrischer Zuordnung des Verbindungsabschnittes 38 zum Schalenteil 33 weist der Verbindungsabschnitt 38 einen Außendurchmesser e auf, der in dem dargestellten Ausführungsbeispiel etwa dem 0,8-Fachen des geringsten freien Innendurchmessers des Schalenteiles 33 entspricht. Hieraus ergibt sich ein entsprechendes Abstandsmaß f zwischen der Außenwandung des Verbindungsabschnittes 38 und der Innenfläche der Schalenwandung, welches bevorzugt 1 bis 5mm beträgt.

Der rohrartige Verbindungsabschnitt 38 erstreckt sich über eine etwa dem 2-Fachen der vertikalen Höhe der Schalenwandung 36 entsprechende Länge und formt in dem über das Schalenteil 33 hinausragenden Endabschnitt einen Anbindungsbereich 39 aus. Dieser ist gebildet durch eine radiale Verdickung mittels welcher der so gebildete Stützfuß 6 an dem Gehäuseboden 8 festlegbar ist.

Bei dem vorbeschriebenen Stützfuß 6 wird die Stoßenergie in Rückstell- und Verformungsenergie umgewandelt, wobei das Elastomerteil 32 in Art einer

Elastomerfeder wirkt. Durch die geometrische Gestaltung ist eine hohe Steifigkeit in vertikaler Richtung zufolge des zylindrisch ausgestalteten Verbindungsabschnittes 38 bei gleichzeitiger hoher Elastizität in horizontaler Richtung zufolge der Anbindung des Verbindungsabschnittes 38 an dem Schalenteil 33 realisiert.

Entsprechende Stöße werden zufolge Verformung bzw. Auslenken des Verbindungsabschnittes 38 aus der Vertikalachse heraus kompensiert, wobei die Schalenwandung 37 in Abhängigkeit von einer Auslenkung des Verbindungsabschnittes 38 gegebenenfalls eine zusätzliche Abstützung erbringt, in dem sich die Wandungsaußenseite des Verbindungsabschnittes 38 punktartig im Bereich der Austrittsebene an einem zugeordneten Randabschnitt der Schalenwandung 36 abstützt.

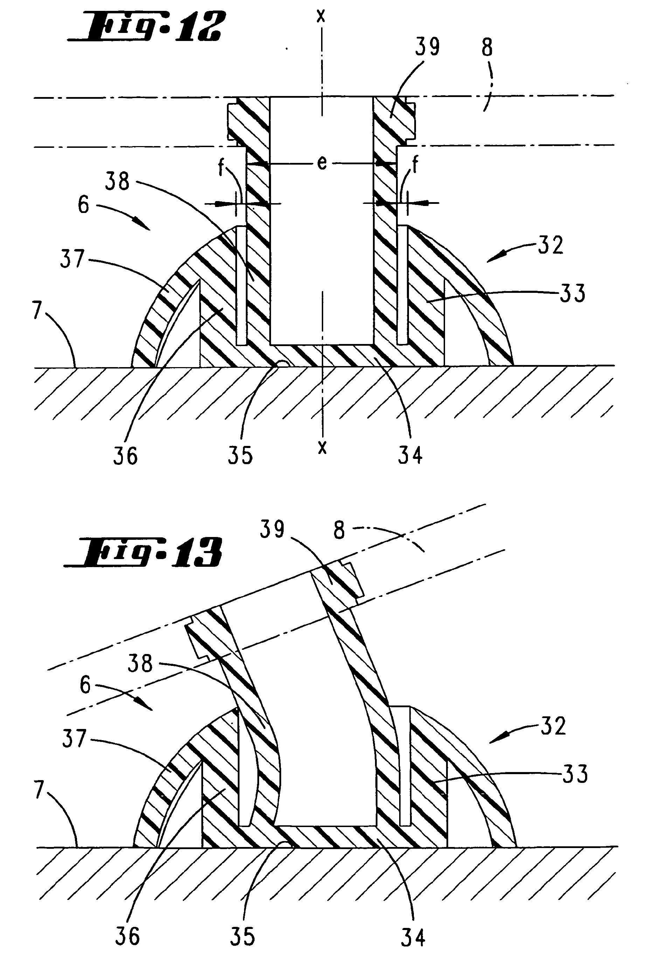

Zufolge der elastischen Eigenschaften stellt sich der Verbindungsabschnitt 38 nach Fortfall der auf diesen einwirkenden Kräfte selbsttätig in die Grundstellung gemäß Fig. 12 zurück.

### BEZUGSZEICHENLISTE

- 1: Küchenmaschine
- 2: Rührgefäß-Aufnahme
- 3: Bedienfeld
- 4: Rührgefäß
- 5: Gehäuse
- 6: Stützfuß
- 7: Tischfläche
- 8: Gehäuseboden
- 9: Fortsatz
- 10: Schalenteil
- 11: Schalenwandung
- 12: Schalenraum
- 13: Schalenboden
- 14: Dornteil
- 15: Stirnfläche
- 16: Elastomerteil
- 17: Boden
- 18: Standfläche
- 19: Mantelabschnitt
- 20: Verdickung
- 21: Ringnut
- 22: Schalendecke
- 23: Außengewinde
- 24: Schraubmutter
- 25: Scheibenteil
- 26: Standteil
- 27: Stützfläche
- 28: Ringteil
- 29: Durchtrittsöffnung
- 30: Elastomerteil
- 31: Aufnahme
- 32: Elastomerteil
- 33: Schalenteil
- 34: Schalenboden
- 35: Standfläche
- 36: Schalenwandung
- 37: Stützwandung
- 38: Verbindungsabschnitt
- 39: Anbindungsbereich

- a: Bewegungsrichtung
- b: Bewegungsrichtung
- c: Spielmaß
- d: Innendurchmesser
- e: Durchmesser
- f: Abstandsmaß

- x: Vertikalachse

## Patentansprüche

1. Standfuß (6), insbesondere für eine Tisch-Küchenmaschine (1), wobei die Küchenmaschine (1) einen nach unten abragenden, gehäuseseitigen Fortsatz (9) aufweist, der auf einem eine Standfläche (18) ausbildenden Elastomerteil (16) aufsitzt, wobei der Fortsatz (9) ein sich nach unten öffnendes Schalenteil (10) und das Elastomerteil (16) ein in das Schalenteil (10) eingreifendes Dornteil (14) aufweist, wobei weiter das Dornteil (14) in dem Schalenteil (10) mit einem quer zu seiner Erstreckung verbleibenden Spiel aufgenommen ist, **dadurch gekennzeichnet, dass** der Fortsatz (9) mit der Standfläche (18) reibschlüssig verbunden ist, dass die Aufnahme des Dornteiles (14) in dem Schalenteil (10) derart ist, dass der Fortsatz (9) gegenüber dem die Standfläche (18) ausbildenden, das Dornteil (14) aufweisenden Elastomerteil (16) schiebebeweglich gelagert ist und dass ein quer zu einer Erstreckung des Dornteils (14) verbleibendes Spiel zusammengefasst ein 1/20 bis 1/5 eines freien Durchmesser (d) des Schalenteils (10) entspricht.

2. Standfuß nach Anspruch 1, **dadurch gekennzeichnet, dass** das Schalenteil (10) stirnseitig freikragend endet.

3. Standfuß nach einem der Ansprüche 1 oder 2, **dadurch gekennzeichnet, dass** das Elastomerteil (16) auf dem Schalenboden (13) ebenflächig aufliegt.

4. Standfuß nach einem der vorhergehenden Ansprüche, **dadurch gekennzeichnet, dass** das Schalenteil (10) außen von einem Mantelabschnitt (19) des Elastomerteils (16) umfasst ist.

5. Standfuß nach Anspruch 4, **dadurch gekennzeichnet, dass** der Mantelabschnitt (19) mit dem Fortsatz (9) fest verbunden ist.

6. Standfuß nach Anspruch 4, **dadurch gekennzeichnet, dass** der Mantelabschnitt (19) an dem Fortsatz (9) rastgehaltert ist.

7. Standfuß nach einem der vorhergehenden Ansprüche, **dadurch gekennzeichnet, dass** eine Umfangsfläche des Elastomerteils (16) sich nach oben hin verjüngend ausgebildet ist

8. Standfuß nach einem der vorhergehenden Ansprüche, **dadurch gekennzeichnet, dass** das Überdeckungsmaß zwischen dem Schalenteil (10) und dem Dornteil (14) in vertikaler Höhe dem 0,2- bis 0,5-Fachen des Durchmessermaßes des Schalenteiles (10) entspricht.

## Claims

1. Foot (6), in particular for a table top food processor (1), the food processor (1) comprising a housing-side projection (9) which projects downwards and rests on an elastomer part (16) which forms a base (18), the projection (9) comprising a shell part (10) which opens downwards and the elastomer part (16) comprising a mandril part (14) which engages in the shell part (10), the mandril part (14) further being accommodated in the shell part (10) with a clearance remaining transverse to the extension thereof, **characterised in that** the projection (9) is frictionally engaged with the base (18), **in that** the accommodation of the mandril part (14) in the shell part (10) is such that the projection (9) is mounted in such a way that it can slide relative to the elastomer part (14) which forms the base (18) and comprises the mandril part (14), and **in that** a clearance which remains transverse to an extension of the mandril part (14) corresponds in total to 1/20 to 1/5 of a free diameter (d) of the shell part (10).

2. Foot according to claim 1, **characterised in that** the shell part (10) ends in a cantilevered manner at the end face.

3. Foot according to either claim 1 or claim 2, **characterised in that** the elastomer part (16) rests on the shell bottom (13) in a planar manner.

4. Foot according to any of the preceding claims, **characterised in that** the shell part (10) is externally encompassed by a casing portion (19) of the elastomer part (16).

5. Foot according to claim 4, **characterised in that** the casing portion (19) is rigidly connected to the projection (9).

6. Foot according to claim 4, **characterised in that** the casing portion (19) is latched to the projection (9).

7. Foot according to any of the preceding claims, **characterised in that** a peripheral face of the elastomer part (16) tapers upwardly.

8. Foot according to any of the preceding claims, **characterised in that** the overlap between the shell part (10) and the mandril part (14) corresponds in vertical height to 0.2 to 0.5 times the diameter of the shell part (10).

## Revendications

1. Pied de support (6), en particulier pour un robot de cuisine sur table (1), le robot de cuisine (1) présentant une saillie (9) côté bâti dépassant vers le bas, qui repose sur une partie élastomère (16) formant une base (18), la saillie (9) présentant une partie coquille (10) s'ouvrant vers le bas et la partie élastomère (16) présentant une partie mandrin (14) s'emboîtant dans la partie coquille (10), la partie mandrin (14) étant également intégrée dans la partie coquille (10) avec un jeu restant transversal par rapport à son extension, **caractérisé en ce que** la saillie (9) est reliée à la base (18) par friction, que l'introduction de la partie mandrin (14) dans la partie coquille (10) est telle que la saillie (9) est logée à coulissement en face de la partie élastomère (16) formant la base (18), présentant la partie mandrin (14) et qu'un jeu restant transversal par rapport à l'extension de la partie mandrin (14) correspond au total à une valeur comprise entre 1/20 et 1/5 d'un diamètre (d) libre de la partie coquille (10).

2. Pied de support selon la revendication 1, **caractérisé en ce que** la partie coquille (10) se termine frontalement en porte à faux.

3. Pied de support selon l'une des revendications 1 ou 2, **caractérisé en ce que** la partie élastomère (16) repose à plat sur le fond de la coquille (13).

4. Pied de support selon l'une des revendications qui précèdent, **caractérisé en ce que** la partie coquille (10) est entourée extérieurement par une section d'enveloppe (19) de la partie élastomère (16).

5. Pied de support selon la revendication 4, **caractérisé en ce que** la section d'enveloppe (19) est reliée fixement à la saillie (9).

6. Pied de support selon la revendication 4, **caractérisé en ce que** la section d'enveloppe (19) est retenue au niveau de la saillie (9).

7. Pied de support selon l'une des revendications qui précèdent, **caractérisé en ce qu'**une surface périphérique de la partie élastomère (16) est formée en pointe vers le haut

8. Pied de support selon l'une des revendications qui précèdent, **caractérisé en ce que** la dimension de recouvrement entre la partie coquille (10) et la partie mandrin (14) correspond dans le sens vertical à une valeur comprise entre 0,2 et 0,5 fois le diamètre de la partie coquille (10).
